# DEMANDE DE BREVET EUROPEEN

(11) **EP 3 059 834 A1**
(43) Date de publication de la demande: **24.08.2016**
(21) Numéro de dépôt: 16156151.9
(22) Date de dépôt: 17.02.2016
(51) Int. Cl.: H02K 1/24, H02K 3/52

(54) **BOBINE POUR ROTOR DE MACHINE ÉLECTRIQUE TOURNANTE ET ROTOR CORRESPONDANT**

(30) Priorité: 20.02.2015 FR 1551482
(71) Demandeur: Valeo Equipements Electriques Moteur, 94046 Créteil Cedex (FR)
(72) Inventeur: BILTERYST, Pierre-Yves, 62170 Brimeux (FR); DELIANNE, Henri, 62630 Maresville (FR); MARGUERITTE, David, 62170 Wailly Beaucamp (FR)

(57) **Abrégé**

L'invention porte principalement sur une bobine (21) pour rotor de machine électrique tournante comprenant une série de couches (C1-CM) chacune comportant une série de spires (S) formée d'un fil unique (68) enroulé autour d'un axe (Y), la série de spires d'une couche (C1-CM) balaye ladite couche (C1-CM) axialement entre deux spires d'extrémité (Se), lesdites spires d'extrémité (Se) situées d'un même côté axial (A1, A2) formant un flanc (F11, F12; F21, F22), ledit flanc (F11, F12; F21, F22) passant par un plan perpendiculaire audit axe (Y), caractérisée en ce que ladite bobine (21) comprend à chacun de ses deux côtés axiaux (A1, A2) au moins deux flancs (F11, F12; F21, F22), lesdits au moins deux flancs (F11, F12; F21, F22) d'un même côté axial (A1, A2) passant par des plans parallèles (P11, P12; P21, P22) décalés axialement l'un par rapport à l'autre.

## Description

La présente invention porte sur une bobine pour rotor de machine électrique tournante, ainsi que sur le rotor correspondant. L'invention trouve une application particulièrement avantageuse avec les alternateurs pour véhicules automobiles, ainsi qu'avec les machines électriques tournantes de type moteur ou alterno-démarreur.

De façon connue en soi, un alternateur polyphasé transforme de l'énergie mécanique en énergie électrique et peut être réversible. Un tel alternateur réversible, appelé alterno-démarreur, est apte dans un autre mode de fonctionnement à transformer de l'énergie électrique en énergie mécanique notamment pour démarrer le moteur thermique du véhicule.

Cet alternateur comporte notamment un carter et, à l'intérieur de celui-ci, un rotor à griffes, solidaire en rotation de manière directe ou indirecte d'un arbre, et un stator, qui entoure le rotor avec présence d'un faible entrefer.

Le stator comporte un corps en forme d'un paquet de tôles doté d'encoches équipées d'isolant d'encoches pour le montage des phases du stator. Ces phases comportent chacune au moins un enroulement traversant les encoches du corps du stator et formant un chignon de part et d'autre du corps du stator. Les enroulements sont obtenus par exemple à partir d'un fil continu recouvert d'émail ou à partir d'éléments conducteurs en forme de barre, tels que des épingles reliées entre elles par exemple par soudage.

Ces enroulements sont par exemple des enroulements triphasés connectés en étoile ou en triangle, dont les sorties sont reliées à au moins un pont redresseur de tension. Le nombre de phases dépend des applications et peut être supérieur à trois.

Par ailleurs, le rotor à griffes comporte une bobine et une paire de roues polaires composée d'une portion cylindrique portant la bobine du rotor, ainsi que de portions de disque s'étendant depuis les extrémités de la portion cylindrique. En outre, une pluralité de pôles magnétiques en forme de griffes s'étendent axialement depuis lesdites portions de disque de façon à recouvrir la bobine de rotor. Les griffes d'une roue polaire sont dirigées axialement vers l'autre roue polaire, la griffe d'une roue polaire pénétrant dans l'espace existant entre deux griffes voisines de l'autre roue polaire, de sorte que les griffes des roues polaires sont imbriquées les unes par rapport aux autres.

La périphérie externe des griffes est d'orientation axiale et définit avec la périphérie interne du corps du stator l'entrefer entre le stator et le rotor. La périphérie interne des griffes est inclinée, les griffes étant moins épaisses à leur extrémité libre.

Afin de réaliser la bobine de rotor suivant une méthode dite de "bobinage tonneau", un fil conducteur est enroulé autour d'un axe tout en étant guidé transversalement par deux flasques transversaux qui déterminent la largeur du bobinage. Le fil forme ainsi des spires qui balayent l'espace entre les flasques en allant dans un sens puis dans l'autre, le changement de sens de bobinage se produisant après la réalisation complète d'une couche de spires s'étendant entre les flasques.

Ainsi, la bobine obtenue comprend une série de couches chacune comportant une série de spires. Les spires d'extrémité situées d'un même côté axial de la bobine forme un flanc passant par un plan perpendiculaire à l'axe. La réalisation d'une bobine ayant une section transversale sensiblement rectangulaire est ainsi bien maîtrisée.

Toutefois, lorsque l'on cherche à adapter la forme de la bobine à la configuration du logement correspondant délimité par les roues polaires, et en particulier à la pente intérieure des griffes, il existe un risque de foisonnement du bobinage dû au fait que les spires tombent l'une sur l'autre et s'entrecroisent lors de la réalisation d'un décalage des spires. En conséquence, pour éviter l'augmentation du taux de rebuts, les procédés de bobinage actuels arrivent à une limite du taux de remplissage du rotor.

L'invention vise à remédier efficacement à cet inconvénient en proposant une bobine pour rotor de machine électrique tournante comprenant une série de couches chacune comportant une série de spires formée d'un fil unique enroulé autour d'un axe, la série de spires d'une couche balaye ladite couche axialement entre deux spires d'extrémité, lesdites spires d'extrémité situées d'un même côté axial formant un flanc, ledit flanc passant par un plan perpendiculaire audit axe, caractérisée en ce que ladite bobine comprend à chacun de ses deux côtés axiaux au moins deux flancs, lesdits au moins deux flancs d'un même côté axial passant par des plans parallèles décalés axialement l'un par rapport à l'autre.

Ainsi, la bobine selon l'invention peut être réalisée sous contrôle par une succession de fenêtres de bobinage variables, ce qui permet d'optimiser le taux remplissage du rotor et donc d'améliorer les performances magnétiques de la machine électrique. Alternativement, à iso-remplissage en cuivre, l'invention permet de réduire l'encombrement de la bobine, en sorte qu'il est possible de modifier la configuration des roues polaires en augmentant localement leur section afin de limiter le risque de saturation magnétique.

Selon une réalisation, ladite bobine comprend à chacun de ses côtés axiaux un flanc supérieur et un flanc inférieur, le flanc inférieur étant formé par des spires d'extrémité appartenant à une série de couches de numéros inférieurs aux numéros des couches des spires d'extrémité formant le flanc supérieur.

Selon une réalisation, ladite bobine comprend un centre de bobine situé dans un plan médian entre deux de ses flancs formé par des spires d'extrémité appartenant à des couches de même numéro, les spires d'extrémité formant un flanc supérieur étant plus proches dudit plan médian que les spires d'extrémité formant un flanc inférieur.

Selon une réalisation, les couches des spires d'extrémité formant le flan supérieur comprennent moins de spires que les couches des spires d'extrémité formant le flan inférieur.

Selon une réalisation, pour chaque couche de spires ledit fil est de type thermodur.

Selon une réalisation, ladite bobine comprend un surmoulage qui enveloppe l'ensemble des couches de spires.

Selon une réalisation, ladite bobine comprend une chaussette rétractable qui enveloppe l'ensemble des couches de spires.

Selon une réalisation, ladite bobine comprend de la colle recouvrant l'ensemble des couches de spires.

Selon une réalisation, le nombre de couches ayant des spires d'extrémité formant le flanc inférieur d'un côté est différent du nombre de couches ayant des spires d'extrémité formant le flanc inférieur de l'autre côté.

Selon une réalisation, l'écart entre les deux nombres de couches vaut 1.

L'invention a également pour objet un rotor de machine électrique tournante comprenant:
- une bobine de rotor telle que précédemment définie ayant un axe, et une paire de roues polaires composées de:
- une portion cylindrique sur laquelle est portée ladite bobine,
- des portions de disque s'étendant radialement vers l'extérieur respectivement depuis une première et une seconde extrémités de ladite portion cylindrique, et
- une pluralité de pôles magnétiques en forme de griffe s'étendant axialement depuis lesdites portions de disque de façon à recouvrir ladite bobine.

Selon une réalisation, lesdites deux roues polaires définissent un logement pour ladite bobine, ledit logement comprenant une face portant ladite bobine, deux premières faces perpendiculaires à l'axe de ladite bobine en regard l'une de l'autre, deux premières faces axiales internes, deux deuxièmes faces perpendiculaires à l'axe de ladite bobine en regard l'une de l'autre, chacun des flancs de ladite bobine étant adossé à une des faces perpendiculaires.

Selon une réalisation, ledit logement comprend en outre deux deuxièmes faces internes inclinées l'une par rapport à l'autre.

Selon une réalisation, ledit logement comprend en outre deux deuxièmes faces axiales internes, chacune des deux deuxièmes faces axiales internes étant sensiblement en contact avec ladite bobine, de sorte que ledit logement présente une forme complémentaire de la forme de ladite bobine.

Selon une réalisation, la couche de spires de numéro le plus élevé dont la spire d'extrémité forme une partie du flanc inférieur est sensiblement en contact avec la première face axiale interne correspondante.

Selon une réalisation, les distances entre l'axe et chacune des premières faces axiales internes sont différentes.

Selon une réalisation, l'écart entre lesdites deux distances est sensiblement égal à un diamètre de fil.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'un alternateur comportant un rotor à griffes selon la présente invention;
La figure 2 montre une vue en coupe partielle d'un premier mode de réalisation d'un rotor à griffes selon la présente invention suivant lequel le taux de remplissage est augmenté;
La figure 3 montre une vue en coupe partielle d'un deuxième mode de réalisation d'un rotor à griffes selon la présente invention suivant lequel la section de passage de flux magnétique est maximisée.

Les éléments identiques, similaires, ou analogues conservent la même référence d'une figure à l'autre.

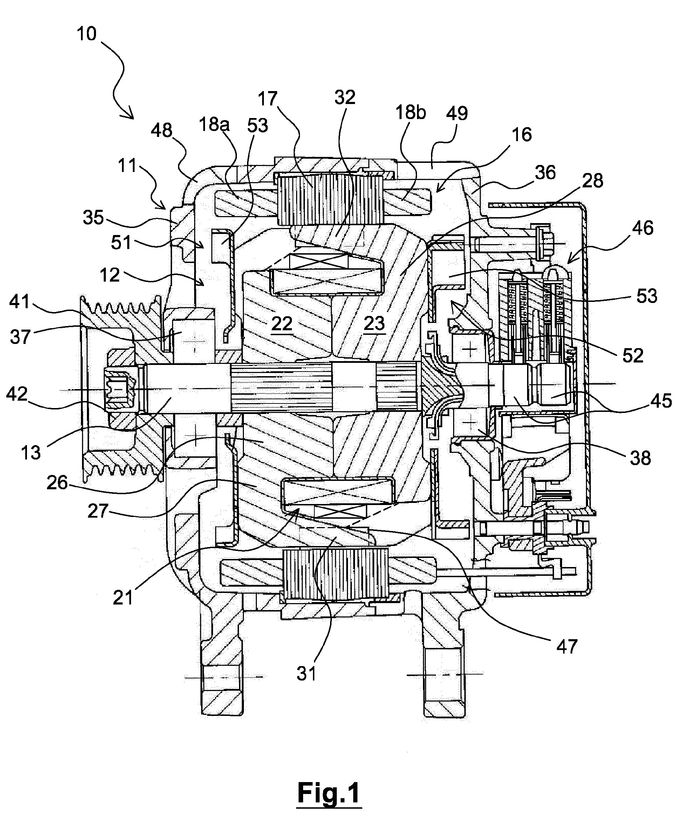

On a représenté sur la figure 1 un alternateur 10 compact et polyphasé, notamment pour véhicule automobile. Cet alternateur 10 transforme de l'énergie mécanique en énergie électrique et peut être réversible. Un tel alternateur 10 réversible, appelé alterno-démarreur, permet de transformer de l'énergie électrique en énergie mécanique notamment pour démarrer le moteur thermique du véhicule.

Cet alternateur 10 comporte un carter 11 et, à l'intérieur de celui-ci, un rotor à griffes 12, solidaire en rotation de manière directe ou indirecte d'un arbre 13, et un stator 16, qui entoure le rotor 12 avec présence d'un entrefer.

L'axe X de l'arbre 13 forme l'axe de rotation du rotor 12. Dans la suite de la description les orientations radiale, transversale, et axiale sont à considérer par rapport à cet axe X.

Le stator 16 comporte un corps 17 en forme d'un paquet de tôles doté d'encoches, par exemple du type semi-fermées, équipées d'isolant d'encoches pour le montage des phases du stator 16, chaque phase comportant au moins un enroulement traversant les encoches du corps 17 du stator 16 et formant, avec toutes les phases, un chignon avant 18a et un chignon arrière 18b de part et d'autre du corps 17 du stator 16.

Les enroulements sont obtenus par exemple à partir d'un fil continu recouvert d'émail ou à partir d'éléments conducteurs en forme de barre, tels que des épingles reliées entre elles par exemple par soudage.

Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR2745445.

Le rotor 12 comprend une bobine 21 ainsi qu'une paire de roues polaires 22, 23 composées d'une portion cylindrique 26 sur laquelle la bobine 21 de rotor est portée, des portions de disque 27, 28 s'étendant radialement vers l'extérieur respectivement depuis une première et une seconde extrémités de la portion cylindrique 26. En outre, une pluralité de pôles magnétiques 31, 32 en forme de griffe s'étendent axialement depuis les portions de disque 27, 28 de façon à recouvrir la bobine 21.

Les griffes d'une roue polaire 22, 23 sont dirigées axialement vers l'autre roue polaire 22, 23, la griffe 31, 32 d'une roue polaire 22, 23 pénétrant dans l'espace existant entre deux griffes voisines 31, 32 de l'autre roue polaire 22, 23, de sorte que les griffes 31, 32 des roues polaires 22, 23 sont imbriquées les unes par rapport aux autres. La périphérie externe des griffes 31, 32 est d'orientation axiale et définit avec la périphérie interne du corps 17 du stator 16 l'entrefer entre le stator 16 et le rotor 12. La périphérie interne des griffes 31, 32 est inclinée. Ces griffes 31, 32 sont moins épaisses à leur extrémité libre.

La portion cylindre 26 correspond ici à deux demi-portions cylindriques issues chacune d'une portion de disque 27, 28. Alternativement, la portion cylindrique 26 est une portion rapportée intercalée axialement entre les deux portions de disque 27, 28.

Les roues polaires 22, 23 et la portion cylindrique 26 sont métalliques en étant ici en matière ferromagnétique, telle que de l'acier doux. L'arbre 13 est également métallique en étant en matériau ferromagnétique, tel que de l'acier, plus dur que les roues polaires 22, 23.

Le carter 11 comporte des paliers avant 35 et arrière 36 assemblés ensemble. Le palier arrière 36 porte un porte-balais 46, le régulateur de tension et au moins un pont redresseur. Les paliers 35, 36 sont de forme creuse et portent chacun centralement un roulement à billes respectivement 37 et 38 pour le montage à rotation de l'arbre 13 du rotor 12.

Une poulie 41 est fixée sur l'extrémité avant de l'arbre 13, ici à l'aide d'un écrou 42 en appui sur le fond de la cavité de la poulie 41. La poulie 41 appartient à un dispositif de transmission de mouvements à au moins une courroie entre l'alternateur 10 et le moteur thermique du véhicule automobile, tandis que l'extrémité arrière de diamètre réduit de l'arbre 13 porte des bagues collectrices 45 reliées par des liaisons filaires aux extrémités de la bobine 21. Des balais appartenant au porte-balais 46 sont disposés de façon à frotter sur les bagues collectrices 45. Le porte-balais 46 est relié à un régulateur de tension.

Lorsque la bobine 21 est alimentée électriquement à partir des balais, le rotor 12 est magnétisé et devient un rotor inducteur 12 avec formation de pôles magnétiques Nord-Sud au niveau des griffes 31, 32 des roues polaires 22, 23. Ce rotor inducteur 12 crée un courant induit alternatif dans le stator induit 16 lorsque l'arbre 13 tourne, le ou les ponts redresseurs permettant de transformer le courant alternatif induit en un courant continu, notamment pour alimenter les charges et les consommateurs du réseau de bord du véhicule automobile, ainsi que pour recharger la batterie du véhicule. Ce rotor 12 pourra comporter des aimants permanents 47 interposés entre deux griffes 31, 32 voisines à la périphérie externe du rotor 12. En variante, le rotor 12 peut être dépourvu de tels aimants 47.

Les paliers avant 35 et arrière 36 comportent des ouvertures latérales avant 48 et arrière 49 pour le passage de l'air en vue de permettre le refroidissement de l'alternateur 10 par circulation d'air engendrée par la rotation d'un ventilateur 51 sur la face frontale avant du rotor 12 et d'un autre ventilateur 52 sur la face dorsale arrière du rotor 12. A cet effet, chaque ventilateur 51, 52 est pourvu d'une pluralité de pales 53. Les ouvertures latérales avant 48 et arrière 49 sont en regard des chignons respectivement avant 18a et arrière 18b.

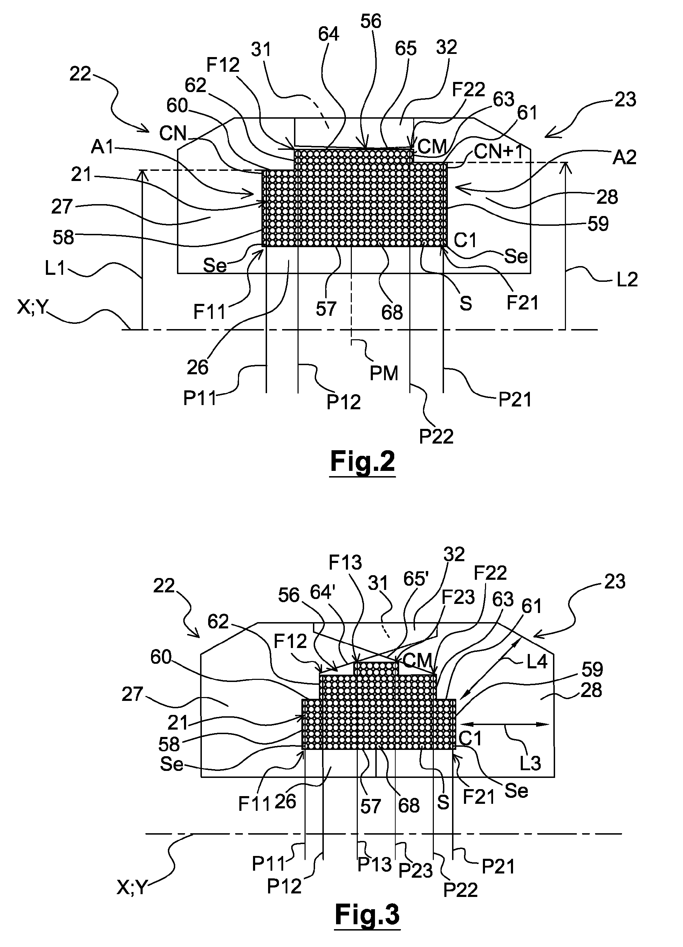

Comme cela est bien visible sur la figure 2, les deux roues polaires 22, 23 définissent un logement 56 pour la bobine 21. En vue en coupe, le logement 56 est délimité par une face 57 de la portion cylindrique 26 portant la bobine 21, deux premières faces 58, 59 perpendiculaires à l'axe de la bobine 21 en regard l'une de l'autre, deux premières faces axiales internes 60, 61, deux deuxièmes faces 62, 63 perpendiculaires à l'axe de la bobine 21 en regard l'une de l'autre, ainsi que deux deuxièmes faces axiales internes 64, 65.

Les premières faces perpendiculaires 58, 59 s'étendent respectivement entre une extrémité de la face 57 et une extrémité correspondante d'une première face axiale interne 60, 61. Les deuxièmes faces perpendiculaires 62, 63 s'étendent respectivement entre l'autre extrémité de la première face axiale interne 60, 61 correspondante et une extrémité de la deuxième face axiale interne 64, 65 correspondante.

Par ailleurs, la bobine 21 de rotor comprend une série de couches C1-CM chacune comportant une série de spires S formée d'un fil unique 68 enroulé autour d'un axe Y correspondant à l'axe X lorsque la bobine 21 est montée sur le rotor 12.

La série de spires S d'une couche C1-CM balaye la couche axialement entre deux spires d'extrémité Se. Les spires d'extrémité Se situées d'un même côté axial A1, A2 forment un flanc passant par un plan perpendiculaire à l'axe Y. Dans le mode de réalisation de la figure 2, la bobine 21 comprend à chacun de ses deux côtés axiaux A1, A2 deux flancs référencés respectivement F11, F12 du côté axial A1 et F21, F22 du côté axial A2. Les deux flancs d'un même côté axial A1, A2 passent par des plans parallèles décalés axialement l'un par rapport à l'autre. Ainsi du côté axial A1, les flancs F11 et F12 passent par les plans parallèles P11 et P12 décalés axialement l'un par rapport à l'autre; tandis que du côté A2 les flancs F21 et F22 passent par des plans parallèles P21 et P22 décalés axialement l'un par rapport à l'autre.

En l'occurrence, la bobine 21 comprend à chacun de ses côtés axiaux A1, A2 un flanc supérieur et un flanc inférieur. Ainsi, du côté A1, le flanc F11 correspond au flanc inférieur; tandis que le flanc F12 correspond au flanc supérieur. Par ailleurs, du côté axial A2, le flanc F21 correspond au flanc inférieur tandis que le flanc F22 correspond au flanc supérieur.

Le flanc inférieur F11, F21 est formé par des spires d'extrémité Se appartenant à une série de couches de numéros inférieurs aux numéros des couches des spires d'extrémité Se formant le flanc supérieur F12, F22. Il est à noter ici que les numéros des couches C1-CM sont attribués par ordre croissant lorsque l'on se déplace de la couche C1 la plus proche de la périphérie externe de la portion cylindrique 26 vers la couche CM la plus éloignée de la portion cylindrique 26. La couche en contact avec la portion cylindrique 26 est ainsi numéroté C1, puis la couche recouvrant cette première couche est numérotée C2, et ainsi de suite, jusqu'à la réalisation de la dernière couche de spires CM de la bobine 21.

Chacun des flancs F11, F12, F21, F22 de la bobine 21 est adossé à une des faces perpendiculaires 58, 59, 62, 63 délimitant le logement 56. Ainsi, les flancs inférieurs F11, F21 sont adossés respectivement aux premières faces perpendiculaires 58, 59; tandis que les flancs supérieurs F12, F22 sont adossés respectivement aux deuxièmes faces perpendiculaires 62, 63.

La bobine 21 comprend un centre de bobine situé dans un plan médian PM entre deux de ses flancs F11, F21 ou F12, F22 formés par des spires d'extrémité Se appartenant à des couches C1-CM de même numéro. Les spires d'extrémité Se formant un flanc supérieur F12, F22 sont plus proches du plan médian PM que les spires d'extrémité Se formant un flanc inférieur F11, F21. Ainsi, les couches des spires d'extrémité Se formant le flan supérieur comprennent moins de spires que les couches des spires d'extrémité Se formant le flan inférieur, en sorte que la partie supérieure de la bobine 21 est plus étroite que la partie inférieure.

Ainsi, la bobine 21 peut être réalisée sous contrôle par une succession de fenêtres de bobinage variables. La fenêtre de bobinage pourra être définie par deux flasques entre lesquels les spires S d'une couche C1-CM sont réalisées alternativement suivant un premier sens, par exemple de droite à gauche en allant d'un flasque vers l'autre; puis dans une direction opposée, par exemple de gauche à droite pour revenir vers le flasque de départ. Le changement de sens est ainsi effectué après chaque réalisation d'une couche de spires C1-CM. L'écartement entre les deux flasques est réduit après la réalisation des deux flancs inférieurs F11, F21 pour pouvoir réaliser les flancs supérieurs F12, F22 plus proches du plan médian PM.

De préférence, le fil 68 utilisé pour réaliser la bobine 21 est de type thermodur, c'est-à-dire qu'il comporte une âme réalisée dans un matériau conducteur recouverte d'une couche d'émail ainsi que d'une couche d'un matériau de liaison que l'on chauffe par passage d'un courant et qu'on laisse ensuite refroidir afin de lier les spires S entre elles.

Alternativement, afin de figer la forme extérieure de la bobine 21 après l'opération de bobinage, la bobine 21 comprend un surmoulage qui enveloppe l'ensemble des couches de spires C1-CM. En variante, une chaussette rétractable enveloppe l'ensemble des couches de spires C1-CM. En variante, la bobine 21 comprend de la colle ou du vernis recouvrant l'ensemble des couches C1-CM.

Par ailleurs, le nombre de couches C1-CN ayant des spires d'extrémité Se formant le flanc inférieur F11 d'un côté axial A1 est différent du nombre de couches C1-CN+1 ayant des spires d'extrémité Se formant le flanc inférieur F21 de l'autre côté axial A2. L'écart entre les deux nombres de couches vaut de préférence 1. Autrement dit, du côté d'un des flancs inférieurs, la bobine 21 présente N couches, tandis qu'elle présente N+1 couche du côté de l'autre flanc inférieur. Le flanc inférieur le plus petit (c'est-à-dire celui formé à partir de N couches) se situe du côté gauche, tandis que le flanc inférieur le plus haut (c'est-à-dire celui formé à partir de N+1 couches) se situe du côté droit lorsque la Nième couche est balayée de gauche à droite. La configuration sera bien entendu inversée dans le cas où la Nième couche est balayée de droite à gauche. On facilite ainsi la réalisation de la partie la plus étroite de la bobine 21 lors de l'opération de bobinage.

Chacune des deux deuxièmes faces axiales internes 64, 65 est sensiblement en contact avec la bobine 21, c'est-à-dire que l'écart entre la bobine 21 et la face 64, 65 correspondante est inférieure au diamètre du fil 68, de sorte que le logement 56 présente une forme complémentaire de la forme de la bobine 21.

De chaque côté A1, A2 de la bobine 21, la couche C1-CM de numéro le plus élevé dont la spire d'extrémité Se forme une partie d'un des flancs inférieurs F11, F21 est sensiblement en contact avec la première face axiale interne 60, 61 correspondante. Ainsi, la couche de spires CN est sensiblement en contact avec la première face axiale interne 60; tandis que la couche CN+1 est sensiblement en contact avec la première face axiale interne 61. Les distances L1, L2 entre l'axe Y et chacune des premières faces axiales internes 60, 61 sont différentes. L'écart entre les distances L1, L2 est sensiblement égal à un diamètre de fil 68.

Une telle configuration permet ainsi d'optimiser le taux de remplissage en cuivre du logement 56 du rotor 12 dans le cas où la base des griffes 31, 32 n'est pas saturée en champ magnétique.

Dans la variante de réalisation de la figure 3, la bobine 21 comprend à chacun de ses deux côtés axiaux A1, A2 trois flancs respectivement F11, F12, F13 et F21, F22, F23 passant par des plans parallèles décalés axialement les uns par rapport aux autres. La bobine 21 présente ainsi trois étages de couches de spires ayant des largeurs différentes. A cet effet, on utilisera trois fenêtres de bobinages différentes pour la réalisation des étages successifs. Par ailleurs, dans ce mode de réalisation, le logement 56 présente deux deuxièmes faces internes 64', 65' appartenant aux griffes 31, 32 inclinées l'une par rapport à l'autre. Dans ce cas, il est possible d'augmenter la section de passage du flux magnétique au niveau des portions de disque 27, 28 (cf. dimension L3) et au niveau de la base des griffes 31, 32 (cf. dimension L4), afin de limiter le risque de saturation magnétique.

Un fil unique 68 est de préférence utilisé pour réaliser l'ensemble des couches de spires C1-CM de la bobine 21. En variante, il serait toutefois possible d'utiliser plusieurs fils 68 pour réaliser la bobine 21, par exemple un par couche C1-CM.

Le bobinage peut aussi être réalisé sur une pièce intermédiaire de laquelle il est séparé après le durcissement du matériau de liaison. Il est ensuite assemblé par un montage serré sur la portion cylindrique 26 des roues polaires 22, 23. En variante, le bobinage est réalisé directement sur la portion cylindrique 26 des roues polaires 22, 23.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Bobine (21) pour rotor de machine électrique tournante comprenant une série de couches (C1-CM) chacune comportant une série de spires (S) toutes formées d'un seul fil unique (68) enroulé autour d'un axe (Y), la série de spires d'une couche (C1-CM) balaye ladite couche (C1-CM) axialement entre deux spires d'extrémité (Se), lesdites spires d'extrémité (Se) situées d'un même côté axial (A1, A2) formant un flanc (F11, F12; F21, F22), ledit flanc (F11, F12; F21, F22) passant par un plan perpendiculaire audit axe (Y), **caractérisée en ce que** ladite bobine (21) comprend à au moins un de ses deux côtés axiaux (A1, A2) au moins deux flancs (F11, F12; F21, F22), lesdits au moins deux flancs (F11, F12; F21, F22) d'un même côté axial (A1, A2) passant par des plans parallèles (P11, P12; P21, P22) décalés axialement l'un par rapport à l'autre.

2. Bobine selon la revendication 1, **caractérisée en ce que** ladite bobine (21) comprend à chacun de ses côtés axiaux (A1, A2) un flanc supérieur (F12, F22) et un flanc inférieur (F11, F21), le flanc inférieur (F11, F21) étant formé par des spires d'extrémité (Se) appartenant à une série de couches (C1-CM) de numéros inférieurs aux numéros des couches (C1-CM) des spires d'extrémité (Se) formant le flanc supérieur (F12, F22).

3. Bobine selon la revendication 2, **caractérisée en ce que** ladite bobine (21) comprend un centre de bobine situé dans un plan médian (PM) entre deux de ses flancs (F11, F12; F21, F22) formé par des spires d'extrémité (Se) appartenant à des couches (C1-CM) de même numéro, les spires d'extrémité (Se) formant un flanc supérieur (F12, F22) étant plus proches dudit plan médian que les spires d'extrémité (Se) formant un flanc inférieur (F11, F21).

4. Bobine selon la revendication 2 ou 3, **caractérisée en ce que** les couches des spires d'extrémité (Se) formant le flan supérieur comprennent moins de spires (S) que les couches des spires d'extrémité (Se) formant le flan inférieur.

5. Bobine selon l'une quelconque des revendications 1 à 4, caractérisée pour chaque couche de spires (C1-CM) ledit fil (68) est de type thermodur.

6. Bobine selon l'une quelconque des revendications 1 à 5, caractérisée en que ladite bobine (21) comprend un surmoulage qui enveloppe l'ensemble des couches de spires (C1-CM).

7. Bobine selon l'une quelconque des revendications 1 à 5, caractérisée en que ladite bobine (21) comprend une chaussette rétractable qui enveloppe l'ensemble des couches de spires (C1-CM).

8. Bobine selon l'une quelconque des revendications 1 à 7, caractérisée en que ladite bobine (21) comprend de la colle recouvrant l'ensemble des couches de spires (C1-CM).

9. Bobine selon l'une quelconque des revendications 1 à 8, **caractérisée en ce que** le nombre de couches (C1-CN) ayant des spires d'extrémité (Se) formant le flanc inférieur (F11, F21) d'un côté (A1, A2) est différent du nombre de couches (C1-CN+1) ayant des spires d'extrémité (Se) formant le flanc inférieur (F11, F21) de l'autre côté (A1, A2).

10. Rotor (12) de machine électrique tournante comprenant:
- une bobine de rotor (21) selon l'une des revendications précédentes ayant un axe (Y), et une paire de roues polaires (22, 23) composées de:
- une portion cylindrique (26) sur laquelle est portée ladite bobine (21),
- des portions de disque (27, 28) s'étendant radialement vers l'extérieur respectivement depuis une première et une seconde extrémités de ladite portion cylindrique (26), et
- une pluralité de pôles magnétiques (31, 32) en forme de griffe s'étendant axialement depuis lesdites portions de disque (27, 28) de façon à recouvrir ladite bobine (21).

11. Rotor selon la revendication 10, **caractérisé en ce que** lesdites deux roues polaires (22, 23) définissent un logement (56) pour ladite bobine (21), ledit logement (56) comprenant une face (57) portant ladite bobine (21), deux premières faces (58, 59) perpendiculaires à l'axe (Y) de ladite bobine (21) en regard l'une de l'autre, deux premières faces axiales internes (60, 61), deux deuxièmes faces (62, 63) perpendiculaires à l'axe (Y) de ladite bobine (21) en regard l'une de l'autre, chacun des flancs (F11, F12; F21, F22) de ladite bobine (21) étant adossé à une des faces perpendiculaires (58, 59, 62, 63).

12. Rotor selon la revendication 11, caractérisé en ce ledit logement (56) comprend en outre deux deuxièmes faces internes (64', 65') inclinées l'une par rapport à l'autre.

13. Rotor selon la revendication 11, caractérisé en ce ledit logement (56) comprend en outre deux deuxièmes faces axiales internes (64, 65), chacune des deux deuxièmes faces axiales internes (64, 65) étant sensiblement en contact avec ladite bobine (21), de sorte que ledit logement (56) présente une forme complémentaire de la forme de ladite bobine (21).

14. Rotor selon l'une quelconque des revendications 11 à 13, **caractérisé en ce que** la couche de spires (C1-CM) de numéro le plus élevé dont la spire d'extrémité (Se) forme une partie du flanc inférieur (F11, F21) est sensiblement en contact avec la première face axiale interne (60, 61) correspondante.

15. Rotor selon l'une quelconque des revendications 11 à 14, **caractérisé en ce que** les distances (L1, L2) entre l'axe (Y) et chacune des premières faces axiales internes (60, 61) sont différentes.
